# EUROPÄISCHE PATENTSCHRIFT

(11) **EP 0 860 079 B1**
(45) Veröffentlichungstag und Bekanntmachung des Hinweises auf die Patenterteilung: **26.05.1999**
(21) Anmeldenummer: 96945538.5
(22) Anmeldetag: 30.10.1996
(51) Int. Cl.: H04N 5/265, H04N 5/45

(54) **SCHALTUNGSANORDNUNG ZUM ÜBERBLENDEN ZWISCHEN BILDFOLGEN**
CIRCUIT ARRANGEMENT FOR FADING BETWEEN PICTURE SEQUENCES
CIRCUITERIE POUR FONDU ENCHAINE ENTRE DES SEQUENCES D'IMAGES

(30) Priorität: 09.11.1995 DE 19541870
(43) Veröffentlichungstag der Anmeldung: 26.08.1998
(73) Patentinhaber: SIEMENS AKTIENGESELLSCHAFT, 80333 München (DE)
(72) Erfinder: MENDE, Manfred, D-82008 Unterhaching (DE)
(86) Internationale Anmeldenummer: DE9602064
(87) Internationale Veröffentlichungsnummer: WO9717802

(56) Entgegenhaltungen:
- EP-A- 0 403 752
- US-A- 3 821 468
- US-A- 4 266 242
- US-A- 5 023 720
- US-A- 5 140 425

## Beschreibung

Die Erfindung betrifft eine Schaltungsanordnung zum überblenden zwischen Bildfolgen.

Bei einem Videosignalverarbeitungsgerät, beispielsweise einem Fernsehgerät, wird bekanntlich beim Programmwechsel schlagartig zwischen der Bildfolge des zuerst eingestellten Kanals auf die Bildfolge des nachfolgend eingestellten Kanals umgeschaltet. Bei Fernsehempfängern mit einem einzigen Tuner entsteht während der Zeitspanne, während der auf den neu einzustellenden Kanal einsynchronisiert wird, eine Störung. Um diese zu überbrücken, wird bisher ein Bild des bisherigen Kanals eingefroren und dann abrupt durch das laufende Programm des nachfolgend einzustellenden Kanals ausgetauscht, oder es wird während der Einsynchronisationsphase der Bildschirm dunkel getastet. In beiden Fällen erfolgt der Programmwechsel abrupt.

In der US-Patentschrift 5 184 222 ist eine Schaltung beschrieben, bei der von einem ersten Bild auf ein zweites Bild überblendet wird, indem das zweite Bild schrittweise in horizontale und vertikale Richtung wächst und dadurch das erste Bild nach und nach überdeckt. Der Bildmittelpunkt des zweiten Bildes kann weitgehend frei gewählt werden. Zur Berechnung eines Steuersignals zur Umschaltung zwischen erstem und zweitem Bild sind relativ aufwendige Berechnungsmittel erforderlich.

In der EP-A-0 197 154 ist ein Verfahren zur Dezimierung von Bildern beschrieben, zwischen denen überblendet wird. Der Bildschirm ist in vertikale Richtung zwischen erstem und zweitem Bild unterteilt. Die Position des Bildschnittes wird als vorgegeben angenommen.

Aus der EP-A-0 403 752 ist eine Anordnung zur Erzeugung von Ein- und Aublendeffekten bekannt, bei der Zählerstände, welche die momentane Position eines Bildpunktes in horizontaler und vertikaler Richtung angeben, mit vorgebbaren, veränderlichen Zählerständen verglichen werden und je nach Vergleichsergebnis ein erstes Videosignal oder ein zweites Videosignal durchgeschaltet wird. Die Synchronisierung des ersten Videosignals mit dem zweiten Videosignal erfolgt mit einer Logikschaltung, die von einem Timing/Kontrollmodul gesteuert wird.

Die Aufgabe der Erfindung besteht darin, eine eingangs genannte Schaltungsanordnung anzugeben, deren Realisierung mit möglichst geringen Mitteln ausführbar ist.

Erfindungsgemäß wird diese Aufgabe durch eine Schaltungsanordnung nach den Merkmalen des Patentanspruchs 1 gelöst.

Bei der erfindungsgemäßen Schaltungsanordnung wird der Programmwechsel durch ein "weiches" Überblenden zwischen dem bisher eingestellten Kanal und dem nachfolgend neu eingestellten Kanal durchgeführt. Der neu einzustellende Kanal "schiebt" sich allmählich über das bisherige Bild des ersten Kanals. Der Betrachter empfindet dies visuell angenehmer als das bisherige abrupte Umschalten. Der zusätzliche Realisierungsaufwand gegenüber bisherigen Lösungen ist insbesondere bei Geräten mit bereits vorhandenem Bildspeicher relativ gering.

Nachfolgend wird die Erfindung anhand der in der Zeichnung dargestellten Figuren näher erläutert.

Es zeigen:
- Figur 1: Bildschirmdarstellungen, die sich gemäß einer ersten Ausführungsform des erfindungsgemäßen Verfahrens ergeben,
- Figur 2: Bildschirmdarstellungen, die sich gemäß einer zweiten Ausführungsform des Verfahrens ergeben und
- Figur 3: ein schaltungstechnisches Realisierungsbeispiel zur Erzeugung der Bildschirmdarstellungen der Figur 2.

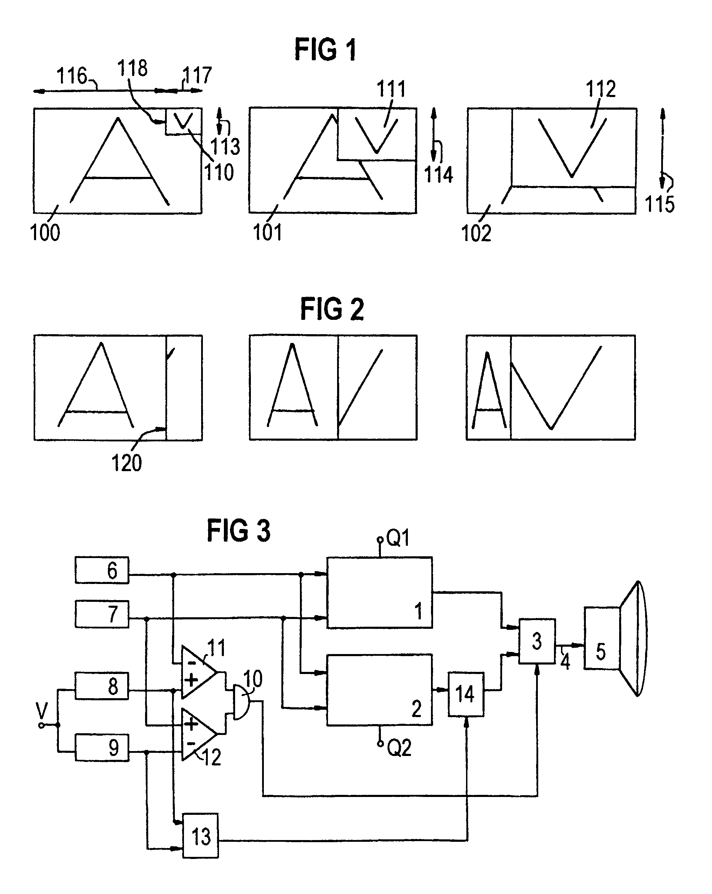

Gemäß Figur 3 werden der Schaltungsanordnung zwei Bildsignale Q1, Q2 zugeführt. Die Bildsignale enthalten jeweils eine Folge von einzelnen Bildern, beispielsweise zeilenverkämmte Halbbilder. Das Bildsignal Q1 wird im Fernsehempfangsgerät, in dem die gezeigte Schaltung enthalten ist, in einem ersten Kanal empfangen, der momentan eingestellt ist. Es soll vom ersten Kanal auf einen zweiten Kanal umgeschaltet werden, dessen Programm vom Bildsignal Q2 geliefert wird. Um die im allgemeinen asynchron vorliegenden Bildsignale zeitlich zu puffern und dann gleichzeitig darstellen zu können, ist für jeden der Kanäle ein Bildspeicher 1, 2 vorgesehen. Zur Überblendung wird ausgangsseitig mittels der Einrichtung 3 zwischen den Speichern 1, 2 umgeschaltet. Dies wird beispielsweise durch einen Multiplexer ausgeführt oder durch eine geeignete Ausleseadresssteuerung der Speicher 1, 2. Das kombinierte Bildsignal am Ausgang 4 der Umsteuereinrichtung 3 wird einem Bildschirm 5 zugeführt.

Gemäß Figur 1 wird nun von der Bildfolge 100, 101, 102 die durch das Videosignal Q1 empfangen wird, auf die Bildfolge 110 umgeschaltet. In der Bildfolge 100, 101, 102 wird als Bildinhalt symbolisch der Buchstabe "A" dargestellt, in der Bildfolge 110, 111, 112 symbolisch der Buchstabe "V". Die Bildfolge 110 beginnt als relativ klein dargestelltes Bild in der rechten oberen Ecke des Bildschirms. Mit dem Fortschreiten des Überblendverfahrens wächst das Bild 110 zum Bild 111 und schließlich zum Bild 112 an und überdeckt dabei den bisher von der Bildfolge 100, 101 bzw. 102 belegten Bereich des Bildschirms. Insgesamt wächst beim Kanalwechsel das Bild 110 beginnend in der rechten oberen Ecke so lange an, bis es vollständig den gesamten Bildschirm bedeckt.

Hierzu wird innerhalb der in den Abschnitten 113, 114, 115 liegenden Zeilen der Bildfolge 100, 101 bzw. 102 vom Bildinhalt des Videosignals Q1 auf den Bildinhalt des Videosignals Q2 umgeschaltet. Es werden bei einer am Bildschirm dargestellten Zeile, die im Bereich 113 liegt, die Bildpunkte während des ersten Zeilenabschnitts 116 aus dem Speicher 1 ausgelesen, während des zweiten Zeilenabschnitts 117 aus dem Speicher 2. Die Umschaltstelle 118 innerhalb der entsprechenden Zeilen zwischen den Abschnitten 116 und 117 verändert sich mit nachfolgend dargestellten Bildern. Sie wandert in Richtung zum Bildanfang des ersten Bildes nach links. Ebenso vergrößert sich der Bereich 113 zum unteren Bildende hin. Mit jedem neu dargestellten Bild, d.h. bildweise, wird die Umschaltstelle innerhalb der entsprechenden Zeilen verändert, und zwar derart, daß der Bildinhalt 100, 101, 102 immer mehr vom Bildinhalt 110, 111, 112 in horizontaler Richtung überdeckt wird. Entsprechendes gilt für die vertikale Richtung.

Bei der in Figur 3 dargestellten schaltungstechnischen Realisierung werden die Auslesevorgänge an den Speichern 1, 2 mittels eines Zeilenzählers 6 und eines Bildpunktzählers 7, der die Bildpunkte innerhalb einer Zeile zählt, für beide Speicher synchron angesteuert werden. Der Zeilenzähler 6 wird zeilenweise taktgesteuert, der Bildpunktzähler 7 wird bildpunktweise taktgesteuert. Die Zähler 6, 7 zählen dabei die aus den Bildspeichern auszulesenden Bilder. Es sind ein Zeilenreferenzzähler 8 sowie ein Bildpunktreferenzzähler 9 vorgesehen, die die Zeilenanzahl 113, 114, 115 des neu einzublendenden Bildes angeben bzw. die Umschaltstelle 118 innerhalb der Zeilen der Bilder des ersten Kanals. Die Referenzzähler 8, 9 werden jeweils um ein vorbestimmtes Inkrement bildweise hochgezählt. Als Zähltakt wird zweckmäßigerweise ein an den Vertikalsynchronimpuls V gekoppeltes Signal verwendet. Die Schrittweite der Referenzzähler 8, 9 ist jeweils derart eingestellt, daß sich die linke untere Ecke der zweiten Bildfolge 110, 111, 112 auf der Bilddiagonalen fortbewegt. Hierzu wird die Umschalteinrichtung 3 dadurch gesteuert, daß die Zählerstände von Zeilenzähler 6 und Zeilenreferenzzähler 8 durch einen Vergleicher 11 miteinander verglichen werden und die Zählerstände von Bildpunktzähler 7 und Bildpunktreferenzzähler 9 durch einen Vergleicher 12. Der erstere Vergleich ist dann erfüllt, wenn der Zählerstand des Zeilenzählers 6 niedriger ist als der Zählerstand des Zeilenreferenzzählers 8. Der zweite Vergleich ist dann erfüllt, wenn der Bildpunktzähler 7 einen höheren Zählerstand aufweist als der Bildpunktreferenzzähler 9. Die Umschalteinrichtung 3 wird dann vom Kanal 1 auf den Kanal 2 umgeschaltet, wenn beide Vergleiche erfüllt sind, was durch ein UND-Gatter 10 angegeben wird. Beim dargestellten Ausführungsbeispiel werden Aufwärtszähler verwendet; bei Abwärtszählern sind die Vergleiche in entsprechender Weise umgekehrt auszuführen.

In der Figur 1 ist dargestellt, daß der Bildinhalt des zweiten Kanals ohne Maßstabsänderung den Bildinhalt des ersten Kanals überdeckt. Durch eine an sich bekannte Dezimierungseinrichtung 14 am Ausgang des Speichers 2 für den zweiten Kanal kann der in den Bildausschnitten dargestellte gesamte Bildinhalt des zweiten Kanals maßstabsgerecht auf die aktuelle Bildgröße verkleinert werden. Der Verkleinerungsfaktor wird dabei aus den Zählerständen der Referenzzähler 8, 9 in der Einrichtung 13 in geeigneter Weise ermittelt. Dies ermöglicht die Darstellung des gesamten Bildinhalts trotz sich ständig verändernder Bildgröße, aber unter Inkaufnahme eines Auflösungsverlustes.

Im Unterschied zu Figur 1 wird in Figur 2 in vertikale Richtung keine Bildanpassung vorgenommen. Die am Bildschirm sichtbare Trennlinie 120 zwischen der Bildfolge des ersten Kanals und der Bildfolge des zweiten Kanals bewegt sich fortlaufend von rechts nach links. Zur diesbezüglichen Realisierung ist die in Figur 3 dargestellte Schaltung derart zu verändern, daß die Umschalteinrichtung 3 nur noch in Abhängigkeit des Vergleichs von Bildpunktzähler 7 mit Bildpunktreferenzzähler 9 gesteuert wird. Zeilenreferenzzähler 8, Vergleicher 11 und Verknüpfungsglied 10 sind nicht erforderlich. Die Umschaltstelle innerhalb jeder Zeile von den Bildern der ersten Bildfolge auf entsprechende Zeilenabschnitte der Bilder der zweiten Bildfolge erfolgt nun in Abhängigkeit vom Zählerstand des Bildpunktreferenzzählers 9, der seinerseits wiederum von einem vom Vertikalsynchronimpuls V abgeleiteten Signal gesteuert wird.

In Weiterbildung der Erfindung für Fernsehgeräte mit einem Tuner wird im Bildspeicher 1 zweckmäßigerweise ein Standbild gespeichert, beispielsweise das letzte vollständig am Bildschirm dargestellte Bild der ersten Bildfolge. Dieses Bild wird als Standbild fortlaufend am Bildschirm wiedergegeben und dabei von dem im Bildspeicher 2 eingeschriebenen Bewegtbild von rechts nach links überdeckt. Der Bildinhalt des Standbilds im Bildspeicher 1 wird betreffend das Ausführungsbeispiel gemäß Figur 2 zweckmäßigerweise durch eine ausgangsseitig am Bildspeicher 1 angeordnete Dezimierungseinrichtung in horizontaler Richtung dezimiert. Der Dezimationsfaktor wird dann zweckmäßigerweise proportional zum Zeilenlängenabschnitt des Bildanteils der ersten, in Ausblendung begriffenen Bildfolge eingestellt mittels Steuerung durch den Bildpunktreferenzzähler 9. Vertikal erfolgt keine Dezimierung. Eine derartige Dezimierungseinrichtung ist relativ einfach ausführbar, da keine Bewegtbilder zu verarbeiten sind. Die Geschwindigkeit der Bildüberdeckung in Figur 2 wird durch die Schrittweite des Bildpunktreferenzzählers 9 eingestellt.

Eine Stauchung des Standbilds für den ersten Bildkanal im Bildspeicher 1 kann auch dadurch erreicht werden, daß der Bildpunktzähler 7 eine vom Bildpunktreferenzzähler 9 gesteuerte veränderbare Schrittweite aufweist.

Wenn bereits durch andere Maßnahmen dafür gesorgt ist, daß die Bildsignale Q1, Q2 synchron vorliegen, kann auf eine Zeitpufferung und somit auf die entsprechenden Bildspeicher 1, 2 gegebenenfalls verzichtet werden. Denkbar ist auch eine Lösung, bei der ein Bildkanal, beispielsweise der zweite Bildkanal, als Referenzkanal verwendet wird, so daß er nicht zwischengespeichert wird und auf den entsprechenden Bildspeicher 2 verzichtet werden kann, während der andere erste Bildkanal zeitlich zur Herstellung der Synchronisation im Bildspeicher 1 gepuffert wird.

## Patentansprüche

1. Schaltungsanordnung zum Überblenden zwischen Bildfolgen mit
- einem ersten Bildspeicher (1) zur Speicherung von mindestens einem Bild einer ersten Bildfolge (100, 101, 102),
- einem zweiten Bildspeicher (2) zur Speicherung von mindestens einem Bild einer zweiten Bildfolge (110, 111, 112),
- einem taktsteuerbaren Bildpunktzähler (7) zum Zählen von Bildpunkten innerhalb einer Bildzeile und einem taktsteuerbaren Zeilenzähler (6) zum Zählen von Bildzeilen, durch die die Bildspeicher (1, 2) zum Auslesen von einem der Bilder ansteuerbar sind,
- einem jeweils bildweise taktsteuerbaren Zeilenreferenzzähler (8) und Bildpunktreferenzzähler (9) und
- Umschaltmittel (3), durch die in Abhängigkeit von einem Vergleich der Zählerstände des Zeilenzählers (6) mit dem Zeilenreferenzzähler (8) sowie des Bildpunktzählers (7) mit dem Bildpunktreferenzzähler (9) zwischen Zeilenabschnitten von Bildern der ersten (100, 101, 102) und der zweiten Bildfolge (110, 111, 112) innerhalb einer Zeile umschaltbar ist.

2. Schaltungsanordnung nach Anspruch 1,
**dadurch gekennzeichnet,** daß die Umschaltmittel dann von der ersten auf die zweite Bildfolge (100, 101, 102; 110, 111, 112) umschaltbar sind, wenn der Zählerstand des Bildpunktzählers (7) größer ist als der Zählerstand des Bildpunktreferenzzählers (9) und der Zählerstand des Zeilenzählers (6) kleiner ist als der Zählerstand des Zeilenreferenzzählers (8).

3. Schaltungsanordnung nach einem der Ansprüche 1 bis 2,
**dadurch gekennzeichnet,** daß der Bildpunktreferenzzähler (9) von einem Vertikalsynchronsignal (V) der ersten Bildfolge gesteuert wird.

4. Schaltungsanordnung nach Anspruch 1,
**dadurch gekennzeichnet,** daß in den Signalpfad für die erste Bildfolge (100, 101, 102) eine Dezimierungseinrichtung geschaltet ist, deren Dezimierungsfaktor in Abhängigkeit vom Zeilenlängenabschnitt der ersten Bildfolge (100, 101, 102) einstellbar ist.

5. Schaltungsanordnung nach Anspruch 1 oder 2,
**dadurch gekennzeichnet,** daß in den Signalpfad für die zweite Bildfolge (110, 111, 112) eine Dezimierungseinrichtung (14) geschaltet ist, deren Dezimierungsfaktor in Abhängigkeit von den Zählerständen das Bildpunktreferenzzählers und/oder Zeilenreferenzzählers (9, 8) einstellbar ist.

6. Schaltungsanordnung nach einem der Ansprüche 1 bis 5,
**dadurch gekennzeichnet,** daß die erste Bildfolge (100, 101, 102) ein Standbild enthält.

## Claims

1. Circuit arrangement for cross-fading between picture sequences having
- a first frame store (1) for storing at least one picture of a first picture sequence (100, 101, 102),
- a second frame store (2) for storing at least one picture of a second picture sequence (110, 111, 112),
- a clockable pixel counter (7) for counting pixels within a picture line and a clockable line counter (6) for counting picture lines, by means of which the frame stores (1, 2) can be driven for the purpose of reading out one of the pictures,
- a pixel reference counter (9) and line reference counter (8), which can be clocked in each case in a picture-by-picture manner, and
- changeover means (3), which make it possible to change over between line sections of pictures of the first (100, 101, 102) and of the second picture sequence (110, 111, 112) within a line in dependence on a comparison of the counter readings of the line counter (6) with the line reference counter (8) and also of the pixel counter (7) with the pixel reference counter (9).

2. Circuit arrangement according to Claim 1,
characterized in that
the changeover means can be changed over from the first to the second picture sequence (100, 101, 102; 110, 111, 112) when the counter reading of the pixel counter (7) is greater than the counter reading of the pixel reference counter (9) and the counter reading of the line counter (6) is less than the counter reading of the line reference counter (8).

3. Circuit arrangement according to one of Claims 1 to 2,
characterized in that
the pixel reference counter (9) is controlled by a vertical sync signal (V) of the first picture sequence.

4. Circuit arrangement according to Claim 1,
characterized in that
a decimation device is connected into the signal path for the first picture sequence (100, 101, 102), the decimation factor of which decimation device is adjustable depending on the line length section of the first picture sequence (100, 101, 102).

5. Circuit arrangement according to Claim 1 or 2,
characterized in that
a decimation device (14) is connected into the signal path for the second picture sequence (110, 111, 112), the decimation factor of which decimation device is adjustable depending on the counter readings of the pixel reference counter and/or line reference counter (9, 8).

6. Circuit arrangement according to one of Claims 1 to 5,
characterized in that
the first picture sequence (100, 101, 102) contains a still frame.

## Revendications

1. Circuit pour fondu enchaîné entre des séquences d'images, comportant :
- une première mémoire d'image (1) pour mémoriser au moins une image d'une première séquence d'images (100, 101, 102),
- une deuxième mémoire d'image (2) pour mémoriser au moins une image d'une deuxième séquence d'images (110, 111, 112),
- un compteur de points d'image (7), dont la cadence peut être commandée, pour compter des points d'image d'une ligne d'image et un compteur de lignes (6), dont la cadence peut être commandée, pour compter des lignes d'image, ces compteurs permettant de commander les mémoires d'images (1, 2) pour la lecture de l'une des images,
- un compteur de référence de lignes (8) et un compteur de référence de points d'image (9) dont les cadences peuvent être commandées respectivement image par image, et
- des moyens de commutation (3), qui permettent de passer dans une ligne, en fonction d'une comparaison des états du compteur de lignes (6) et du compteur de référence de lignes (8) ainsi que du compteur de points d'images (7) et du compteur de référence de points d'images (9), entre des tronçons de lignes d'image de la première séquence d'image (100, 101, 102) et de la deuxième séquence d'images (110, 111, 112).

2. Circuit selon la revendication 1,
caractérisé par le fait que les moyens de commutation peuvent passer de la première à la deuxième séquence d'images (100, 101, 102 ; 110, 111, 112) lorsque l'état du compteur de points d'images (7) est supérieur à l'état du compteur de référence de points d'images (9) et lorsque l'état du compteur de lignes (6) est inférieur à l'état du compteur de référence de lignes (8).

3. Circuit selon l'une des revendications 1 ou 2,
caractérisé par le fait que le compteur de référence de points d'image (9) est commandé par un signal de synchronisation verticale (V) de la première séquence d'images.

4. Circuit selon la revendication 1,
caractérisé par le fait qu'il est branché dans le chemin du signal pour la première séquence d'images (100, 101, 102) un dispositif de décimation, dont le facteur de décimation peut être réglé en fonction du tronçon de longueur de ligne de la première séquence d'images (100, 101, 102).

5. Circuit selon la revendication 1 ou 2,
caractérisé par le fait qu'il est branché dans le chemin du signal pour la deuxième séquence d'images (110, 111, 112) un dispositif de décimation (14), dont le facteur de décimation peut être réglé en fonction des états du compteur de référence de points d'image (9) et/ou du compteur de référence de lignes (8).

6. Circuit selon l'une des revendications 1 à 5,
caractérisé par le fait que la première séquence d'images (100, 101, 102) contient une image fixe.
